Europäisches Patentamt

European Patent Office

Office européen des brevets

(19)

(11) Publication number : **0 076 673 B2**

# (12) NEW EUROPEAN PATENT SPECIFICATION

(45) Date of publication of the new patent specification : **10.03.93 Bulletin 93/10**

(51) Int. Cl.⁵ : **B29C 67/12**

(21) Application number : **82305248.5**

(22) Date of filing : **04.10.82**

(54) **Moulding method.**

(30) Priority : **06.10.81 GB 8130144**
**02.04.82 GB 8209893**

(43) Date of publication of application :
**13.04.83 Bulletin 83/15**

(45) Publication of the grant of the patent :
**11.01.89 Bulletin 89/02**

(45) Mention of the opposition decision :
**10.03.93 Bulletin 93/10**

(84) Designated Contracting States :
**AT BE CH DE FR IT LI LU NL SE**

(56) References cited :
**DD-A- 137 680**
**DE-B- 1 008 911**
**US-A- 3 975 483**
**"Low Cost Tooling for Composite Structure",**
**Swazey and Litvak, Society of Manufacturing**
**Engineers, 1975**

(56) References cited :
**"Carboform-Preimpregnated High Perform-**
**ance Carbon Fibres", Fothergill & Harvey Ltd.,**
**1975**
**"Low Cost Composite Structure", Nadler and**
**Jaffee, Society of Manufacturing Engineers,**
**1974**
**"Carboform Preimpregnated High Modulus**
**Carbon Fibre", Fothergill & Harvey Ltd, 1970**
**Instruction sheets relating to epoxy resin lami-**
**nated systems,Ciba-Geigy, 1979-1981**

(73) Proprietor : **Advanced Composite**
**Components Limited**
**Delves Road Heanor Gate Industrial Estate**
**Heanor Derbyshire DE7 7SJ (GB)**

(72) Inventor : **Sloman, Roger Mark c/o Adv. Comp.**
**Comp. Ltd.**
**Delves Road Heanor Gate Ind. Est.**
**Heanor Derby DE7 7SJ (GB)**

(74) Representative : **Drever, Ronald Fergus et al**
**Swindell & Pearson 48, Friar Gate**
**Derby DE1 1GY (GB)**

EP 0 076 673 B2

## Description

The invention relates to a fibre-reinforced resinous material moulding method.

There are currently many methods of moulding high performance fibre-reinforced resin materials, but all involve the basic principles of combining a liquid or semi-liquid resin with a strong, stiff fibrous reinforcement. When the liquid resin system has been cured, usually by the action of chemical hardeners, the resulting fibre reinforced material may be used as a structural member. The application of heat is often required in this process.

A particularly convenient method of utilising the resin and fibre is by pre-impregnation, where the fibre, resin and hardener are combined to give a sheet-like form (prepreg) which is easily handled, and has a suitable shelf life at ambient and sub-ambient temperatures. When heated, the resin becomes liquid and by the application of pressure the resin can be made to flow so that a plurality of layers are consolidated together to form an essentially void-free laminate, which is then suitable for high performance structural applications. Conventionally, temperatures between about 100° and 200°C are used in the prepreg moulding process, during which the resin flows, and is then cured (solidified) by the action of the elevated temperature on the resin/hardener system.

This type of material and moulding method ispreferred over most others for applications where rapid production combined with high quality, consistency, and maximum weight reduction in the final moulded component are important.

One consequence of the relatively high temperatures (generally over 100°C) required during the moulding process is that the tooling or moulds have to be dimensionally stable at the moulding temperature and pressure.

Swiss Patent 357864 discloses a method which does not utilise a prepreg and where low pressures (1 atmosphere) are used. It indicates that metal sheets or wooden boards can be used to form the mould. It will be readily appreciated if moulds of this nature were used in the method described, i.e. utilising moulding temperatures of above 80°C, for volume production the product would have relatively large dimensional and shape variation due to mould distortion.

If more than one or a few components have to be accurately manufactured this means that relatively expensive tooling or mould materials and methods have to be used. This is a serious problem if the component to be manufactured is very large, or only small quantities are required, so that the tooling or mould cost may be very high compared to the cost of manufacture of the components. If very large components are required the cost of providing large high temperature ovens may also be prohibitive.

It is therefore apparent that conventional prepreg resin systems which cure at relatively high temperatures are not suitable for certain applications even though their good handling qualities and high laminate performance are very desirable.

One known process which may be thought to overcome the problems is disclosed in DE-A-2 831 679 where light is used as the curing initiation circumstances so that curing at relatively low temperature is achieved. This method, however, has certain drawbacks which preclude its use in many situations normally encountered in moulding commercial articles.

It is essential with this prior method for light to be available throughout the article to cause the resin/hardener system to cure. Many of today's fibre reinforcements do not transmit light, for example carbon fibre. Additionally, if a thick layer of fibre and resin/hardener is built up light transmission through it is inhibited and even prevented so that in some instances the resin/ hardener does not cure as insufficient light to initiate the curing reaches it.

The Applicants' method does not exhibit this disadvantage.

Another known process is disclosed in DE-A-2 317 945. Here again visible light, ultra violet light or an electron beam is used as the curing initiating circumstance. This method also suffers from the drawbacks described in the preceding paragraphs, for example the curing light or electron beam may not penetrate the entire depth of the layer to be cured. Moulds of complex shape may also lead to masking of some areas of the lay-up leading to lack of curing of such areas. Additionally this method calls for the use of a resin comprising at least one ethylenically unsaturated polymer. This results in an initially cured article which is less stable than is preferred in many cases; in fact the prior method calls for further shaping after initial curing which is directly contrary to the aims of the present invention.

The invention provides a method for moulding an article of tooling or a mould from a pre-impregnated fibre reinforced resinous material, the method including the steps of using a mould, laying a prepreg comprising reinforcing fibres and which has been pre-impregnated with all the resin and hardener of a resin and hardener system on the mould, characterised in that the method includes an initial and final curing step in which the initial step is to bring the prepreg to an initially cured condition at a temperature of less than 60°C while applying pressure to the prepreg and at which the prepreg is brought to the final shape of the article and in which the final step is to bring the prepreg to a finally cured condition by removing the article in its initially cured condition from the mould and further curing it while it remains unsupported by a mould.

The prepreg may be prepared from one or more resins and one or more hardeners. The prepreg is preferably formed from components such that the fully cured prepreg (and the resulting moulded article) has a high heat distortion temperature for instance greater than 200°C.

It will be apparent that for the best accuracy possible, and also for the sake of convenience, it is preferable that the resin in the prepreg cures at ambient temperature, since this will eliminate any inaccuracies and residual stresses due to thermal expansion.

The method now proposed utilises a prepreg resin system in which the reactions giving rise to rapid curing are initiated by means which do not result in a significant rise in temperature in the resin, layer or pattern/tooling etc.

The mould may be made of wood, plaster, foamed resin, low temperature glass fibre or other materials which are castable or formable at low temperatures.

The ability to use wood as the basis of tooling and moulds for use with prepreg is of great importance because:-

1) It allows the inexpensive manufacture of very large tooling or moulds.

2) It allows the preparation of accurate and dimensionally stable moulds suitable for high temperatures use directly from wooden patterns.

This is very significant because most patterns are conventionally made from wood. (It is currently conventional practice to manufacture fibre reinforced resin moulds by the known hand layup process from these wooden patterns. The primary function of these moulds is that they are dimensionally stable, but the materials and methods used currently do not fully and conveniently meet this criterion. Problems are often encountered with dimensional changes during the mould manufacturing process, or during the component making life of the mould).

If, therefore, more than one component is being manufactured from a wooden pattern or mould it is possible to keep the initial cure temperature low enough that the wooden pattern or mould does not distort and can therefore be used again.

A consequence of the high heat resistance of prepreg systems used according to certain preferable aspects of the invention is that they are resistant to creep (deformation under long term loading) and so are very suitable for the production of accurate, stable, high temperature moulds. One example of a resin formulation which is suitable for the manufacture of a prepreg which has the desired combination of low cure temperature and high heat distortion temperature is as follows:-

Example 1

|  | Parts by weight |
|---|---|
| Ciba Geigy Resin TM Araldite LY 558 | 80 |
| Shell Chemicals Resin TM Epikote 834 | 20 |
| Anchor Chemicals Hardener TM Anchor 1171 | 7 |

Examples of methods for carrying out the invention where heat is not required for curing will now be described by way of example only.

Example 2

Chemical methods not initiated by heat

It is possible to use chemical compounds which are sensitive to conditions other than elevated temperatures (greater then ambient) and which break down or react with other chemicals to give compounds which can promote or take part in reactions which lead to rapid cure of the resin.

Many different chemical routes to this objective are possible, and there are several physical and physio-chemical ways of achieving the initiation of rapid cure by means other than increasing the temperatures above ambient.

Example 3

Physical separation of active or potentially active compounds

Alternatively it is possible to provide physical separation of the active compounds within the prepreg until mixing and reaction is required. The active compounds should either be sufficiently well distributed throughout the prepreg initially, or be capable of sufficiently rapid migration throughout the resin system when freed from physical separation. Possible methods of achieving physical separation could be:-

a) microencapsulation techniques,

b) coating the fibres or other particulate matter in the prepreg/layup system with single or multiple layers of suitable materials,

c) absorption of suitable chemicals into pores or cavities within particulate matter contained within the prepreg or layup system.

There are various means by which the chemicals may be freed from their physical restraint, some of which could be:-

a) by the use of ultrasonic or other frequencies to break down the walls of the encapsulating spheres, or other physical barriers,

b) by the use of ultrasonic or other frequencies to break down the physico-chemical restraints which are used to keep the active or potential active constituents separated,

c) by the use of mechanical, hydrostatic, or other methods of applying pressure or shock to break down any physical or physico-chemical barriers being used to keep the active or potentially active constituents separated,

d) by the use of combinations of any of the methods outlined previously.

It will also be realised that there are many possibilities for using combinations of either of the two basic means of providing latency of curing activity, and also for using combinations of means for activating the systems used and initiating rapid cure of the prepreg resin system.

It will also be noted that the methods suggested also have great advantage for the manufacture of components, as well as for use in making tooling.

It will be realised that the following advantages are derived, at least in part, from use of the methods described above:-

a) The manufacture of accurate, high quality, stable, high temperature tooling directly from wooden or other conventional patterns.

b) The manufacture of very large components or structures for which the tooling could not be provided economically in materials other than wood or foamed plastics etc., etc.

c) The combined use of normal moulding techniques (such as hand layup) with prepreg materials without needing to modify conventional hand layup tooling for high temperature use.

d) The manufacture of one-off prototype or development components or structures from prepreg where the cost of tooling might otherwise be prohibitive.


**Claims**

1.  A method for moulding an article of tooling or a mould from a pre-impregnated fibre reinforced resinous material, the method including the steps of using a mould, laying a prepreg comprising reinforcing fibres and which has been pre-impregnated with all the resin and hardener of a resin and hardener system on the mould, characterised in that the method includes an initial and final curing step in which the initial step is to bring the prepreg to an initially cured condition at a temperature of less than 60°C while applying pressure to the prepreg and at which the prepreg is brought to the final shape of the article and in which the final step is to bring the prepreg to a finally cured condition by removing the article in its initially cured condition from the mould and further curing it while it remains unsupported by a mould.

2.  A method as claimed in claim 1, characterised in that the reactions giving rise to initial curing are initiated by means which result in a substantially constant temperature in the prepreg.

3.  A method as claimed in any one of the preceding claims, characterised in that the mould comprises one or more of the materials of the group comprising wood, plaster, foamed resin, glass fibre.

## Patentansprüche

1. Verfahren zum Formen eines Gegenstandes in Gestalt eines Formwerkzeugs oder einer Form aus einem vorimprägnierten faserverstärkten Harzmaterial, bei dem eine Form verwendet und ein Prepreg, das Verstärkungsfasern enthält und mit dem ganzen Harz und Härter eines Harz- und Härtersystems vorimprägniert worden ist, auf die Form gelegt wird, dadurch gekennzeichnet, daß das Verfahren eine Anfangs- und Endaushärtstufe enthält, wobei in der Anfangsstufe das Prepreg unter Druckanwendung auf das Prepreg bei einer Temperatur von weniger als 60°C in einen Anfangsaushärtzustand und in die Endgestalt des Gegenstandes gebracht wird und wobei in der Endstufe das Prepreg in einen Endaushärtzustand gebracht wird, indem man den Gegenstand in seinem Anfangsaushärtzustand aus der Form entfernt und, während er ungestützt durch die Form bleibt, weiter aushärtet.

2. Verfahren nach Anspruch 1, dadurch gekennzeichnet, daß die das anfängliche Aushärten verursachenden Reaktionen durch Mittel in Gang gesetzt werden, die zu einer im wesentlichen konstanten Temperatur im Prepreg führen.

3. Verfahren nach irgendeinem der vorstehenden Ansprüche, dadurch gekennzeichnet, daß die Form eines oder mehrere der Materialien aus der Holz, Gips, geschäumtes Harz, Glasfasermaterial enthaltenden Gruppe enthält.

## Revendications

1. Procédé de moulage d'un article d'outillage ou un moule à partir d'un matériau résineux préimprégné renforcé de fibres, ce procédé comprenant les étapes consistant à faire appel à un moule et à déposer, sur le moule, une couche de préimprégné comprenant des fibres de renforcement et qui a été préimprégnée de toute la résine, et durcisseur d'une résine et d'un système de durcisseur, **caractérisé en ce que** le procédé comprend une étape de solidification initiale et une étape de solidification finale, l'étape initiale servant à amener le préimprégné à un état initialement solidifié, à une température inférieure à 60°C tandis qu'une pression est appliquée au préimprégné, le préimprégné étant, pendant cette étape initiale, amené à la forme définitive de l'article, et l'étape finale servant à amener le préimprégné à un état définitivement solidifié, en sortant l'article du moule à son état initialement solidifié puis en le solidifiant définitivement sans qu'il soit supporté par un moule.

2. Procédé selon la revendication 1, caractérisé en ce que les réactions engendrant la solidification initiale sont déclenchées par des moyens qui résultent en une température sensiblement constante dans le préimprégné.

3. Procédé selon une quelconque des revendications précédentes, caractérisé en ce que le moule comprend un ou plusieurs des matériaux du groupe constitué du bois, du plâtre, des résines alvéolaires et des fibres de verre.